# FASCICULE DE BREVET EUROPEEN

(11) **EP 3 830 056 B1**
(45) Date de publication et mention de la délivrance du brevet: **03.01.2024**
(21) Numéro de dépôt: 19762439.8
(22) Date de dépôt: 23.07.2019
(51) Int. Cl.: C04B 35/80, C04B 35/83, B29B 11/16, C04B 35/563, C04B 35/565, C04B 35/571, C04B 35/58, C04B 35/584, C04B 35/628, F01D 5/28

(54) **PROCÉDÉ DE FABRICATION D'UNE PIECE EN CMC**
VERFAHREN ZUR HERSTELLUNG EINES AUS CMC GEFERTIGTEN TEILS
METHOD FOR MANUFACTURING A PART MADE FROM CMC

(30) Priorité: 03.08.2018 US 201862714263 P
(43) Date de publication de la demande: 09.06.2021
(73) Titulaire: Safran Ceramics, 33185 Le Haillan (FR)
(72) Inventeur: BOUILLON, Eric, 33185 Le Haillan (FR); PHILIPPE, Eric, 33700 Merignac (FR); GARNIER, Gildas, 33700 Merignac (FR); CARLIN, Maxime, François, Roger, 33700 Merignac (FR); VERRILLI, Michael, Cincinnati, Ohio 45215-0514 (US)
(74) Mandataire: Cabinet Beau de Loménie
(86) Numéro de dépôt international: PCT/FR2019/051825
(87) Numéro de publication internationale: WO 2020/025878

(56) Documents cités:
- EP-A1- 0 835 853
- WO-A1-2010/063946
- FR-A1- 2 790 470
- US-A1- 2018 135 457

## Description

### Arrière-plan de l'invention

L'invention concerne la fabrication de pièces en matériau composite à matrice au moins majoritairement en céramique, matériau ci-après désigné par CMC.

Dans les moteurs aéronautiques et en particulier dans les turbines à gaz ou turbomachines de tels moteurs, les pièces soumises à de hautes températures sont depuis longtemps réalisées en alliages métalliques. Les exigences actuelles et futures en matière de réduction de consommation spécifique, diminution de pollution, etc., dans les moteurs aéronautiques engendrent un accroissement de masse significative pour ces derniers.

Afin de réduire de façon significative la masse et admettre des températures de fonctionnement plus élevées que celles autorisées avec les alliages métalliques actuels, on utilise de plus en plus des matériaux composites à matrice céramique.

En effet, les matériaux composites à matrice céramique (CMC) font partie des matériaux composites dits thermostructuraux, c'est-à-dire des matériaux composites ayant des bonnes propriétés mécaniques et une capacité à conserver ces propriétés à température élevée. En outre, des pièces, telles que des aubes, réalisées en CMC présentent un gain de masse significatif par rapport à de mêmes pièces réalisées avec les alliages métalliques habituels.

De façon bien connue, les pièces en CMC sont formées par un renfort fibreux en fibres réfractaires (carbone ou céramique) obtenu par tissage tridimensionnel ou multicouche qui est densifié par une matrice céramique, notamment carbure, nitrure, oxyde réfractaire,.... Des exemples typiques de matériaux CMC sont les matériaux C-SiC (renfort en fibres de carbone et matrice en carbure de silicium), les matériaux SiC-SiC et les matériaux C-C/SiC (matrice mixte carbone/carbure de silicium). La fabrication de pièces en composite CMC est bien connue. La densification du renfort fibreux par une matrice céramique est en général réalisée par voie gazeuse (infiltration chimique en phase vapeur). Un procédé de fabrication d'une aube de turbomachine en CMC est notamment décrit dans le document US2012055609.

Cependant, les pièces en CMC ainsi obtenues présentent un aspect de surface ondulé et relativement rugueux qui peut s'avérer incompatible avec les performances aérodynamiques requises pour des pièces telles que des aubes. L'ondulation de surface est due au renfort fibreux tandis que la rugosité est liée à la matrice céramique, en particulier lorsque celle-ci est déposée par infiltration chimique en phase vapeur (CVI). En outre, la densification par CVI ne permet pas d'atteindre un taux de densification très élevé, les pièces ainsi densifiées présentant en générale une porosité globale résiduelle comprise entre 15% et 20% en volume.

### Objet et résumé de l'invention

La présente invention a pour objet de fabriquer des pièces en CMC qui présentent un état de surface maîtrisé tout en conservant un caractère structural même en surface.

A cet effet, l'invention propose un procédé de fabrication d'une pièce en matériau composite à matrice au moins majoritairement en céramique, le procédé comprenant :
- la réalisation par tissage tridimensionnel ou multicouche d'une structure fibreuse ;
- la mise en forme de la structure fibreuse pour former une âme de préforme fibreuse ;
- le dépôt sur les fibres de l'âme de préforme d'une interphase ;
- la consolidation de l'âme de préforme par densification partielle de ladite âme comprenant la formation d'une phase de matrice par infiltration chimique en phase gazeuse ;
- le dépôt d'une poudre de particules céramiques dans la porosité de l'âme de préforme ;
- le drapage d'une ou plusieurs strates de fibres non tissées pré-imprégnés sur tout ou partie de la surface externe de l'âme de préforme ;
- le traitement thermique de l'âme de préforme et de la ou les strates pré-imprégnées de manière à former une préforme fibreuse hybride.
- la poursuite de la densification par infiltration de la préforme fibreuse hybride avec une composition d'infiltration contenant au moins du silicium de manière à obtenir une pièce en matériau composite à matrice céramique.

En drapant la surface externe de l'âme de préforme tissée 3D avec une ou plusieurs strates non tissées, on confère à la pièce finale un bon état de surface compatible avec des applications aérodynamiques tout en conservant en surface un caractère structural en raison de la présence de fibres dans les strates. En outre, le tissage tridimensionnel ou multicouche permet de définir des renforts fibreux ayant des géométries complexes et présentant une très bonne tenue mécanique notamment vis-à-vis du délaminage en comparaison avec les renfort formés par empilement de couches de tissu bidimensionnels. L'âme de préforme tissée 3D ou multicouche représente l'essentiel du volume final de la pièce à fabriquer, la ou les strates non tissées étant seulement drapées à sa surface pour améliorer l'état de surface de l'âme. On conserve ainsi le bénéfice industriel lié à la fabrication de pièces en matériau composite à partir d'un renfort fibreux obtenu par tissage tridimensionnel ou multicouche.

### Brève description des dessins

D'autres particularités et avantages de l'invention ressortiront à la lecture de la description faite ci-après à titre indicatif amis non limitatif en référence aux dessins annexés sur lesquels :
- la figure 1 est un ordinogramme indiquant des étapes successives d'un mode de réalisation d'un procédé conforme à l'invention ;
- la figure 2 montre la fabrication de strates ou plis unidirectionnels pré-imprégnés ;
- la figure 3 illustre de façon très schématique la disposition de deux ensembles de couches de fils dans une ébauche fibreuse tissée tridimensionnelle destinée à la réalisation d'une préforme fibreuse pour une aube ;
- les figures 4, 5 et 6 illustrent des étapes successives de réalisation d'une âme de préforme fibreuse pour une aube à partir de l'ébauche fibreuse de la figure 3 ;
- la figure 7 illustre la réalisation d'une préforme hybride fibreuse à partir de l'âme de préforme de la figure 6 ;
- la figure 8 est une vue en perspective d'une aube de turbine à gaz obtenue à partir de la préforme hybride de la figure 9 ;
- la figure 9 est un ordinogramme indiquant des étapes successives d'un procédé conforme à l'invention appliqué à la fabrication d'une aube de turbine à gaz.

### Description détaillée de modes de réalisation

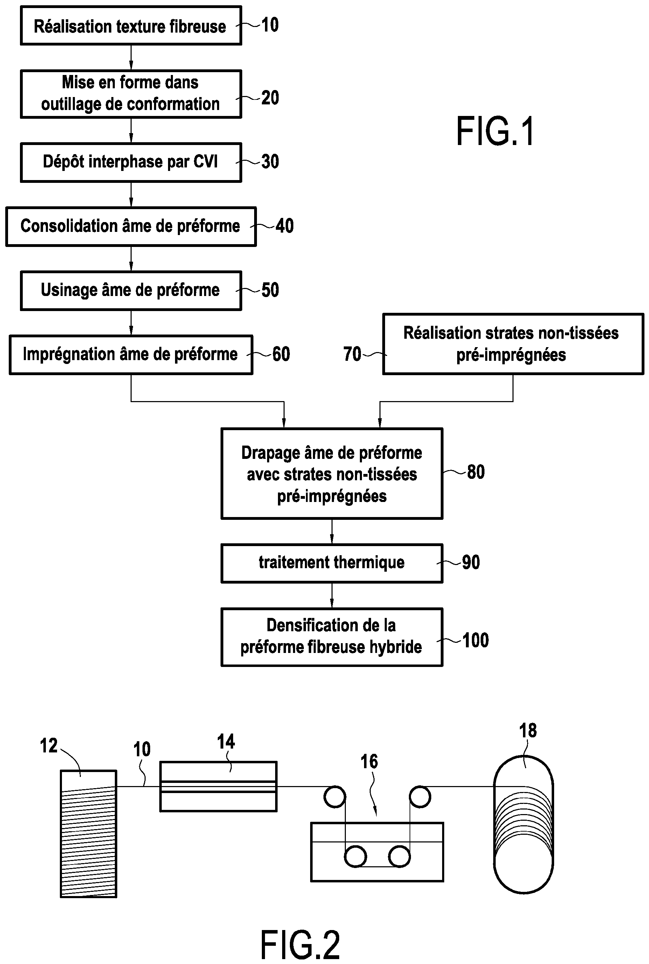

La figure 1 montre des étapes successives d'un mode de mise en oeuvre d'un procédé selon l'invention pour la fabrication d'une pièce en CMC.

A l'étape 10, une structure fibreuse destinée à former une âme de préforme fibreuse est obtenue par tissage tridimensionnel ou par tissage multicouche.

Par "tissage tridimensionnel" ou "tissage 3D", on entend ici un mode de tissage par lequel certains au moins des fils de chaîne lient des fils de trame sur plusieurs couches de trame comme par exemple un "tissage interlock". Par "tissage interlock", on entend ici une armure de tissage 3D dont chaque couche de chaîne lie plusieurs couches de trames avec tous les fils de la même colonne de chaîne ayant le même mouvement dans le plan de l'armure.

Par "tissage multicouche", on désigne ici un tissage 3D avec plusieurs couches de trame dont l'armure de base de chaque couche est équivalente à une armure de tissu 2D classique, tel qu'une armure de type toile, satin ou sergé, mais avec certains points de l'armure qui lient les couches de trame entre elles.

La réalisation de la structure fibreuse par tissage 3D ou multicouche permet d'obtenir une liaison entre les couches, donc d'avoir une bonne tenue mécanique de la structure fibreuse et de la pièce en matériau composite obtenue, en une seule opération textile.

La structure fibreuse peut être réalisée de façon connue au moyen d'un métier à tisser de type jacquard sur lequel on a disposé un faisceau de fils de chaînes ou torons en une pluralité de couches, les fils de chaîne étant liés par des couches de fils de trame ou torons également disposés en une pluralité de couches. Un exemple détaillé de réalisation d'une préforme fibreuse destinée à former le renfort fibreux d'une aube pour moteur aéronautique à partir d'une ébauche fibreuse tissée 3D est notamment décrit en détails dans les documents US 7 101 154, US 7 241 112 et WO 2010/061140. Le document US 2010/111678 divulgue la réalisation d'une préforme fibreuse par tissage tridimensionnelle utilisée pour former un anneau complet en CMC destiné à être utilisé dans une turbine à gaz.

Les fils ou torons utilisés pour tisser l'âme de préforme fibreuse peuvent être constitués de fibres céramique, par exemple des fibres formées essentiellement de carbure de silicium SiC (désignées ci-après fibres SiC) ou de nitrure de silicium Si₃N₄. On peut notamment utiliser des fils fournis par la société japonaise Nippon Carbon sous la référence « Hi-Nicalon » ou, de préférence, sous la référence « Hi-Nicalon Type-S » ayant une limite d'allongement élastique élevée. Les fils ou torons utilisés peuvent être également constitués de fibres de carbone.

A l'étape 20, la structure fibreuse est mise en forme et maintenue dans sa forme au moyen d'un outillage de conformation, pour obtenir une âme de préforme fibreuse ayant un forme voisine de celle de la pièce à fabriquer. Des exemples de mise en forme de préformes fibreuses à partir d'un structure fibreuse peuvent être trouvés notamment dans la demande de brevet US 2011/0293828.

L'âme de préforme étant maintenue dans son outillage de conformation, par exemple en graphite, une interphase de défragilisation est formée de façon connue par infiltration chimique en phase vapeur ou CVI sur les fibres de l'âme de préforme, cette interphase étant notamment en carbone pyrolytique ou PyC, ou en nitrure de bore (BN), ou en carbone, éventuellement dopé au bore ou BC (avec 5%at à 20%at de bore, le reste étant du carbone) (étape 30). L'épaisseur de l'interphase est de préférence comprise entre 10 nm et 1000 nm.

Les paramètres du processus CVI, notamment température et pression dans le four, et composition de la phase gazeuse réactionnelle précurseur du matériau de l'interphase, sont choisis pour avoir une cinétique de dépôt limitée afin de favoriser la diffusion de la phase gazeuse au coeur de la préforme et éviter un gradient d'épaisseur de dépôt d'interphase significatif dans l'épaisseur de la préforme. La cinétique de dépôt, pour des paramètres donnés de processus CVI, peut être aisément déterminée par expérience, en mesurant l'épaisseur d'un dépôt formé sur la surface d'une pièce témoin, par exemple un bloc de SiC monolithique, en fonction de la durée de la phase de dépôt. Elle peut être aussi mesurée en faisant le rapport entre l'épaisseur de dépôt, mesurée par un examen en microscopie optique ou microscopie électronique à balayage sur une coupe transversale polie, et la durée de la phase de dépôt.

Dans le cas de fibres en céramique, notamment de fibres SiC, un traitement de surface de celles-ci préalablement à la formation du revêtement d'interphase peut être éventuellement réalisé pour éliminer l'ensimage et une couche superficielle d'oxyde tel que de la silice SiO₂ s'ils sont présents sur les fibres.

En outre, après le dépôt de l'interphase, en particulier dans le cas d'une interphase BN, un traitement thermique de stabilisation de l'interphase peut être réalisé sous atmosphère neutre, par exemple sous argon, sans exposition préalable de l'interphase à un environnement oxydant et avant formation d'une couche de matrice sur l'interphase. Le traitement thermique est avantageusement réalisé dans le four CVI, immédiatement après la fin du dépôt de l'interphase. L'objet du traitement thermique est de stabiliser chimiquement le matériau de l'interphase en provoquant le dégazage d'espèces volatiles issues de la phase gazeuse réactionnelle et présentes dans le dépôt, et en éliminant la présence de sites actifs sur lesquels de l'oxygène pourrait se greffer si l'interphase venait à être exposée à un environnement oxydant lors de l'utilisation de la pièce en CMC.

A l'étape 40, l'âme de préforme est consolidée par une phase ou couche de matrice déposée par voie gazeuse (CVI) ou par voir liquide. Dans le cas de la voie gazeuse, l'âme de préforme est maintenue dans l'outillage de conformation dans le four CVI tandis qu'une couche de matrice céramique est formée par CVI sur l'interphase pour consolidation de l'âme de préforme, c'est-à-dire pour lier les fibres de la préforme suffisamment entre elles pour que la préforme puisse conserver sa forme sans l'assistance de l'outillage de conformation. Cette couche de matrice est par exemple en SiC. La couche de matrice peut également être une couche d'un matériau auto-cicatrisant contenant du bore, par exemple un système ternaire Si-B-C ou du carbure de bore B4C capable de former, en présence d'oxygène, un verre de type borosilicate ayant des propriétés auto-cicatrisantes. On pourra se référer aux documents US 5 246 736 et US 5 965 266 qui décrivent l'obtention par CVI de telles couches ou phases auto-cicatrisantes.

La consolidation par voir liquide consiste à imprégner l'âme de préforme avec un précurseur liquide de céramique et effectuer un traitement thermique de pyrolyse pour transformer le précurseur en céramique. Des précurseurs liquides de céramique, notamment de SiC, peuvent être des résines de type polycarbosilane (PCS) ou polytitanocarbosilane (PTCS) ou polysilazane (PSZ).

L'épaisseur de la première phase de matrice est au moins égale à 500 nm, de préférence comprise entre 1 µm et 30 µm.

Comme indiqué ci-avant, l'épaisseur totale de l'interphase et la couche de matrice est choisie suffisante pour consolider l'âme de préforme fibreuse, c'est-à-dire pour lier entre elles les fibres de l'âme de préforme de façon suffisante pour que la préforme puisse être manipulée en conservant sa forme sans assistance d'outillage de maintien. Cette épaisseur peut être au moins égale à 500 nm. Après consolidation, l'âme de préforme reste poreuse, la porosité initiale n'étant par exemple comblée que pour une partie minoritaire par l'interphase et la couche de matrice.

La réalisation de dépôts de PyC, BC, B4C, Si-B-C, Si3N4, BN et SiC par CVI est connue. On pourra notamment se référer aux documents US 5 246 736, US 5 738 951, US 5 965 266, US 6 068 930 et US 6 284 358.

On notera que l'étape de formation de l'interphase par CVI pourra être réalisée sur les fibres de la structure fibreuse avant conformation de celle-ci dans la mesure où l'interphase est suffisamment mince pour ne pas affecter la capacité souhaitée de déformation de la structure fibreuse.

Après consolidation, l'âme de préforme consolidée poreuse est retirée de l'outillage de conformation. Si nécessaire, l'âme de préforme peut être alors usinée (étape 50) à la forme et aux dimensions désirées.

L'étape suivante (étape 60) consiste à imprégner l'âme de préforme avec une barbotine contenant au moins une poudre de particules céramique et un ou plusieurs liants organiques comme de l'eau par voie SC (« Slurry Casting »). Le matériau des particules peut être choisi parmi un des matériaux suivants ou un mélange des matériaux suivants : SiC, nitrure de silicium ou Si₃N₄, SiC+C, carbure de bore ou B₄C et siliciure de titane ou TiSi₂. Une fois l'âme de préforme imprégnée, celle-ci est séchée afin d'éliminer la phase liquide (liants) de la barbotine.

Parallèlement aux étapes 10 à 60 décrites précédemment, le procédé comprend la réalisation de strates ou plis non tissés pré-imprégnés (étape 70). Plus précisément, comme illustré sur la figure 2, un faisceau de fibres continues 10 est déroulé à partir d'un dévidoir ou tambour 12. Les fibres sont par exemple des fibres SiC ou carbone. Le faisceau 10 traverse une chambre de traitement 14 dans laquelle les fibres continues sont revêtues d'une couche d'un matériau céramique, par exemple SiC, par dépôt chimique en phase vapeur CVD. Ce revêtement céramique sert à protéger les fibres lors des traitements ultérieurs. Le revêtement céramique peut être notamment constitué de SiC ou de nitrure de bore (BN) seul ou dopé au silicium afin d'accroître la résistance à l'oxydation. Après la formation du revêtement sur les fibres continues, le faisceau de fibres circule à travers un récipient 16 qui contient une résine précurseur de carbone ou de céramique. A titre d'exemples, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Le faisceau de fibres est alors enroulé sur un tambour 18 afin de former une bande unidirectionnelle pré-imprégnée. On laisse ensuite la bande sécher puis on la retire du tambour. On découpe la bande en plusieurs parties afin d'obtenir des strates ou plis unidirectionnels pré-imprégnés. Chaque strate est découpée suivant la forme et les dimensions de la partie d'âme de préforme qui doit être recouverte. Un tel procédé de réalisation de strates ou plis unidirectionnel pré-imprégné est notamment décrit dans le document US 2006/0043628.

Les strates ou plis non tissés pré-imprégnés peuvent également être formés à partir de fibres discontinues liées entre elles sous forme d'une couche par une résine précurseur de carbone ou de céramique.

Le procédé se poursuit par le drapage de l'âme de préforme avec une ou plusieurs strates non tissées pré-imprégnées obtenues comme décrit ci-avant (étape 80). Tout ou partie de la surface externe de l'âme de préforme peut être recouverte avec les strates non tissées pré-imprégnées. Dans le cas où seulement une partie de la surface externe de l'âme de préforme doit présenter un état de surface lisse, comme c'est le cas par exemple d'une pièce où seule une partie de sa surface externe est exposée à un flux d'air, seule cette partie est drapée avec la ou les strates non tissées pré-imprégnées. Dans le cas par exemple d'une pièce en matériau composite qui est destinée à délimiter une partie de la veine d'une turbine à gaz, telle qu'un anneau de turbine, seule la surface externe de cette pièce exposée au flux a besoin de présenter un état de surface lisse et d'être, par conséquent, drapée avec des strates non tissées pré-imprégnées.

Une fois l'âme de préforme drapée avec la ou les strates non tissées pré-imprégnées, l'ensemble ainsi constitué est placé dans un moule de cuisson afin de réaliser un traitement thermique à l'étape 90. De façon connue, le moule de cuisson comprend en général deux coquilles comportant chacune respectivement une empreinte, les empreintes formant, une fois réunies (i.e. après la fermeture du moule), une cavité de moulage correspondant à la forme et aux dimensions de la pièce à fabriquer. Le moule est alors chauffé, par exemple en autoclave, à une température permettant d'obtenir le collage des strates non tissées pré-imprégnées sur l'âme de préforme et la transformation du précurseur présent dans les strates non tissées. Le traitement thermique réalisé à l'étape 90 comprend un traitement de polymérisation qui permet de finaliser le collage des strates non tissées sur l'âme de préforme et un traitement de pyrolyse qui permet de transformer le précurseur présent dans les strates non tissées en carbone ou en céramique. La pyrolyse permet de préparer les strates non tissées pré-imprégnées à l'étape suivante d'infiltration en ré-ouvrant la porosité dans ces strates, un retrait de 50% à 70% volumique de précurseur étant observé à l'issue de la pyrolyse. On obtient alors une préforme fibreuse hybride constituée de l'âme de préforme tissée 3D et de la ou des strates collées sur celle-ci.

A l'étape 100, on procède à la densification de la préforme fibreuse hybride par infiltration de celle-ci avec une composition de silicium ou à base de silicium à l'état fondu correspondant au procédé bien connu dit « MI » (pour « Melt Infiltration »). Plus précisément, la préforme hybride est chauffée tout en étant en contact avec une source de silicium métallique en fusion ou un alliage à l'état fondu contenant du silicium. Le silicium fondu mouille facilement le carbure de silicium et/ou le carbone présent dans la préforme, ce qui facilite grandement sa pénétration dans les pores de la préforme hybride par capillarité. Il est ainsi possible d'obtenir un niveau de densification élevée ou, à l'inverse, un taux de porosité

Dans le cas où la poudre introduite préalablement dans l'âme de préforme est en carbone ou si la préforme hybride contient une phase carbone accessible, et/ou dans le cas de présence de résidu carbone dans la préforme hybride, le silicium réagit avec celui-ci pour former du carbure de silicium SiC. Dans le cas où la poudre introduite préalablement dans l'âme de préforme est en céramique, notamment carbure, nitrure ou siliciure, on obtient une matrice partiellement en silicium liant la poudre céramique. Dans tous les cas, la matrice est majoritairement en céramique.

Un processus de densification par voie MI est décrit notamment dans les brevets US 4,889,686, US 4,994,904 et US 5,015,540. Dans ce cas, pour le choix de la température du traitement thermique, il faudra plus particulièrement prendre en compte le fait que le processus MI avec infiltration de silicium en fusion est réalisé à une température généralement d'au moins 1420°C, cette température pouvant être toutefois un peu inférieure avec un alliage à base de silicium.

On obtient ainsi une pièce en matériau composite à matrice céramique ou CMC qui présente un taux de porosité inférieur à 10% tout en ayant une surface externe qui présente en tout ou partie un état de surface lisse.

La surface externe de la pièce ou une partie de cette surface peut être revêtue d'une couche de « peinture » céramique ou d'une barrière environnementale, ou EBC (« Environmental Barrier Coating ») ayant une fonction de protection thermique et/ou de protection contre la corrosion en environnement oxydant et/ou humide. On pourra notamment se référer aux demandes de brevets WO2010/063946, WO 2010/072978, US 2009/0169873 et US 2010/003504.

On décrit maintenant un exemple de mise en oeuvre d'un procédé de l'invention appliqué à la fabrication d'une aube en CMC pour une turbine à gaz telle que celle d'un moteur d'avion.

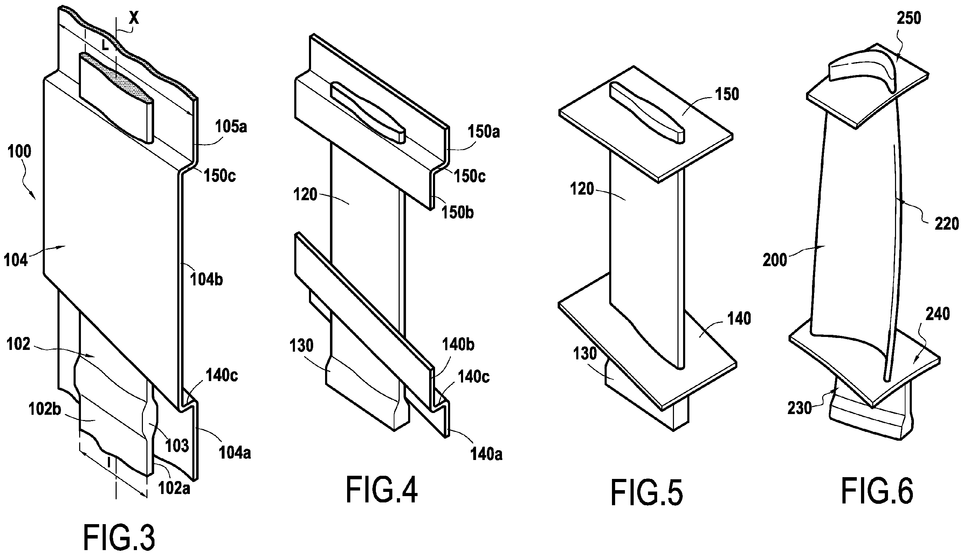

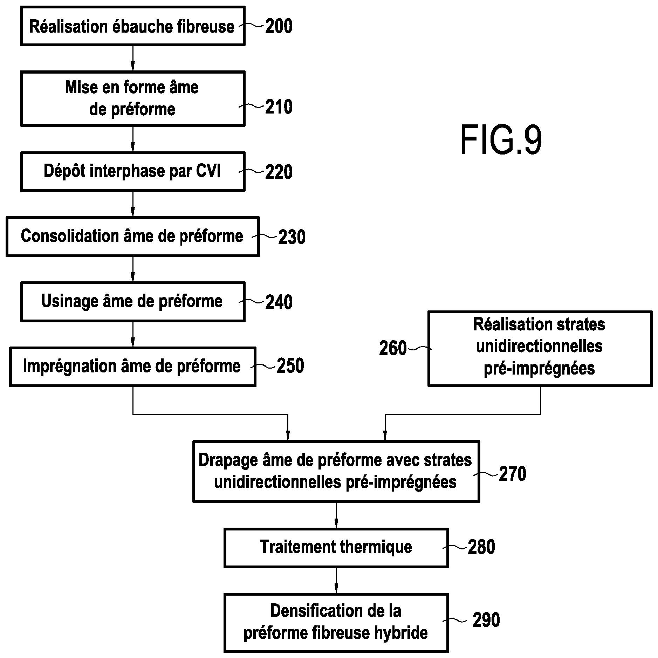

La figure 3 montre très schématiquement une ébauche fibreuse 100 à partir de laquelle une âme de préforme fibreuse d'aube peut être mise en forme afin, après densification par une matrice et usinage éventuel. L'ébauche 100, qui comprend deux parties 102, 104, est obtenue par tissage tridimensionnel ou tissage multicouches (étape 200, figure 9), seules les enveloppes de ces deux parties étant représentées sur la figure 3. L'ébauche 100 est ici tissée avec des fils ou torons constitués de fibres SiC et fournis par la société japonaise Nippon Carbon sous la référence « Hi-Nicalon Type-S ».

La partie 102 est destinée, après mise en forme, à constituer une partie de préforme fibreuse d'aube correspondant à une préforme de pale et pied d'aube. La partie 104 est destinée, après mise en forme, à constituer les parties de préforme fibreuse d'aube correspondant à des préformes de plateforme et talon d'aube. Les deux parties 102, 104 sont sous forme de bandes s'étendant de façon générale dans une direction X correspondant à la direction longitudinale de l'aube à réaliser. La bande fibreuse 102 présente, dans sa partie destinée à former une préforme de pale, une épaisseur variable déterminée en fonction de l'épaisseur de profil de la pale de l'aube à réaliser. Dans sa partie destinée à former une préforme de pied, la bande fibreuse 102 présente une surépaisseur 103 déterminée en fonction de l'épaisseur du pied de l'aube à réaliser.

La bande 104 comprend une première partie 104 a qui s'étend le long et au voisinage d'une première face 102a de la bande 102, une deuxième partie 104b qui s'étend le long et au voisinage de la deuxième face 102b de la bande 102 et une troisième partie 105a qui s'étend le long et au voisinage de la première face 102a de la bande 102. Les parties 104a et 104b se raccordent par une partie de raccordement 140c qui s'étend transversalement par rapport à la bande 102 à un emplacement correspondant à celui de la plateforme de l'aube à réaliser. La partie de raccordement 140c traverse la bande en formant un angle α par rapport à la normale à la direction longitudinale de l'ébauche fibreuse. Les parties 104b et 105a se raccordent par une partie de raccordement 150c qui s'étend transversalement par rapport à la bande 102 à un emplacement correspondant à celui du talon de l'aube à réaliser.

Les bandes 102 et 104 sont tissées simultanément par tissage tridimensionnel, sans liaison entre la bande 102 et les parties 104a, 104b et 105a de la bande 104 et en tissant une pluralité d'ébauches 100 successives de façon continue dans la direction X.

Les figures 4 à 6 montrent très schématiquement comment une préforme fibreuse ayant une forme proche de celle de l'aube à fabriquer peut être obtenue à partir de l'ébauche fibreuse 100.

La bande fibreuse 102 est coupée à une extrémité dans la surépaisseur 103 et à une autre extrémité un peu au-delà de la partie de raccordement 150 c pour avoir une bande 120 de longueur correspondant à la dimension longitudinale de l'aube à fabriquer avec une partie renflée 130 formée par une partie de la surépaisseur 103 et située à un emplacement correspondant à la position du pied de l'aube à fabriquer. En outre, des découpes sont pratiquées aux extrémités des parties 104a, 105a de la bande 104 et dans la partie 104b de celle-ci pour laisser subsister des tronçons 140a et 140b de part et d'autre de la partie de raccordement 140c, et des tronçons 150a et 150b de part et d'autre de la partie de raccordement 150c, comme le montre la figure 4. Les longueurs des tronçons 140a, 140b et 150a, 150b sont déterminées en fonction des longueurs de plateforme et de talon dans l'aube à fabriquer.

Du fait de la déliaison entre la bande 102 de l'ébauche fibreuse, d'une part, et les parties 104a, 104b et 105a, d'autre part, les tronçons 140a, 140b, 150a et 150b peuvent être rabattus perpendiculairement à la bande 102 sans couper de fils pour former des plateaux 140, 150, comme montré par la figure 5.

A l'étape 210, une âme de préforme fibreuse 200 de l'aube à fabriquer est obtenue par moulage avec déformation de la bande 102 pour reproduire le profil incurvé de la pale de l'aube et déformation des plateaux 140, 150 pour reproduire des formes semblables à celles de la plateforme et du talon de l'aube, comme le montre la figure 6. On obtient ainsi une âme de préforme fibreuse 200 avec une partie 220 de préforme de pale, une partie 230 de préforme de pied (avec préforme d'échasse) et des parties 240, 250 de préforme de plateforme et de préforme de talon.

L'âme de préforme 200 étant maintenue dans son outillage de conformation, par exemple en graphite, une interphase est formée par CVI sur les fibres de l'âme de préforme, cette interphase étant ici en carbone pyrolytique ou PyC ou en nitrure de bore (BN) (étape 220).

A l'étape 230, l'âme de préforme étant toujours maintenue dans l'outillage de conformation dans le four CVI, une couche de matrice SiC est formée par CVI sur l'interphase pour consolidation de l'âme de préforme, c'est-à-dire pour lier les fibres de la préforme suffisamment entre elles pour que la préforme puisse conserver sa forme sans l'assistance de l'outillage de conformation. Après consolidation, l'âme de préforme reste poreuse, la porosité initiale n'étant par exemple comblée que pour une partie minoritaire par l'interphase et la couche de matrice.

Après consolidation, l'âme de préforme consolidée poreuse est retirée de l'outillage de conformation. L'âme de préforme est alors usinée (étape 240) à la forme et aux dimensions désirées.

L'étape suivante (étape 250) consiste à imprégner l'âme de préforme avec une barbotine contenant au moins une poudre de particules de SiC ou Si₃N₄, et un ou plusieurs liants organiques comme de l'eau par voie SC (« Slurry Casting »). Une fois l'âme de préforme imprégnée, celle-ci est séchée afin d'éliminer la phase liquide (liants) de la barbotine.

Parallèlement aux étapes 200 à 250 décrites précédemment, des strates ou plis unidirectionnels pré-imprégnés sont réalisés comme déjà décrits précédemment (étape 260). Dans l'exemple décrit ici, les strates sont réalisées à partir de fibres continues de SiC revêtues par dépôt CVD d'une couche d'interphase en nitrure de bore (BN) et SiC, les strates étant pré-imprégnées avec une résine précurseur de SiC.

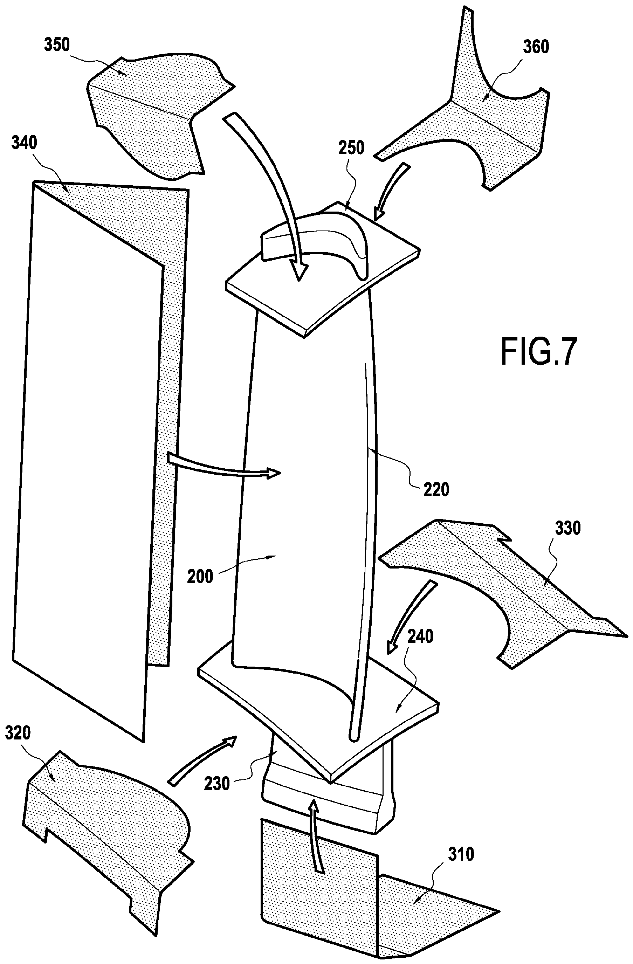

Dans l'exemple décrit ici et comme illustré sur la figure 7, on découpe plusieurs strates 310, 320, 330, 340, 350 et 360. La strate 310 est destinée à être drapée sur la partie 230 de préforme de pied de l'âme de préforme. Les strates 320 et 330 sont destinées à être drapées sur la partie 240 de préforme de plateforme. La strate 340 est destinée à être drapée sur la partie 220 de préforme de pale. Les strates 350 et 360 sont destinées à être drapées sur la partie 250 de préforme de talon. En fonction de l'épaisseur souhaitée, on peut draper plusieurs exemplaires des strates 310, 320, 330, 340, 350 et 360 sur les parties de l'âme de préforme correspondantes.

La réalisation de l'aube se poursuit par le drapage de l'âme de préforme avec une ou plusieurs strates unidirectionnelles pré-imprégnées obtenues comme décrit ci-avant (étape 760, figure 7).

Une fois l'âme de préforme 200 drapée les strates 310, 320, 330, 340, 350 et 360, l'ensemble ainsi constitué est placé dans un moule de cuisson (étape 280) afin de réaliser un traitement thermique à l'étape 280. Le traitement thermique réalisé à l'étape 280 correspond à une polymérisation et une pyrolyse. On obtient alors une préforme fibreuse hybride constituée de l'âme de préforme tissée 3D 200 et des strates 310, 320, 330, 340, 350 et 360 collées sur celle-ci.

A l'étape 290, on procède à la densification de la préforme fibreuse hybride par infiltration de celle-ci avec une composition de silicium à l'état fondu correspondant au procédé bien connu dit « MI » (pour « Melt Infiltration »). Les résidus carbone présents dans la préforme hybride issus notamment de la pyrolyse réagissent avec le silicium pour former du SiC. Les particules de SiC ou Si₃N₄ introduites préalablement dans l'âme de préforme sont liées entre elles par le silicium formant ainsi une matrice majoritairement en céramique.

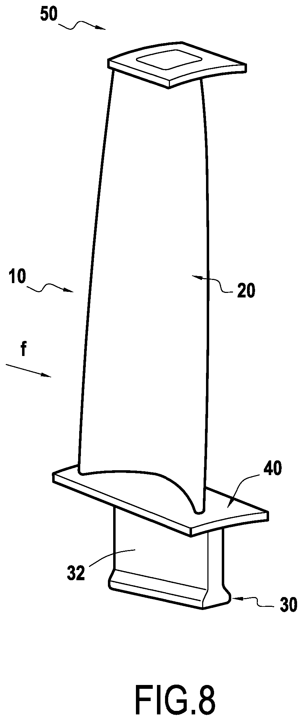

On obtient ainsi, comme illustré sur la figure 8, une aube 10 en matériau composite à matrice céramique ou CMC qui présente un taux de porosité inférieur à 10% tout en ayant une surface externe qui présente en tout ou partie un état de surface lisse. L'aube 10 comprend une pale 20, un pied 30 formé par une partie de plus forte épaisseur, par exemple à section en forme de bulbe ou queue d'aronde, prolongé par une échasse 32, une plateforme intérieure 40 située entre l'échasse 32 et la pale 20 et une plateforme extérieure ou talon 50 au voisinage de l'extrémité libre de la pale.

La surface externe de l'aube peut être revêtue d'une couche de « peinture » céramique ou d'une barrière environnementale, ou EBC (« Environmental Barrier Coating ») ayant une fonction de protection thermique et/ou de protection contre la corrosion en environnement oxydant et/ou humide.

## Revendications

1. Procédé de fabrication d'une pièce en matériau composite à matrice au moins majoritairement en céramique, le procédé comprenant :
- la réalisation par tissage tridimensionnel ou multicouche d'une structure fibreuse (100) ;
- la mise en forme de la structure fibreuse pour former une âme de préforme fibreuse (200) ;
- le dépôt sur les fibres de l'âme de préforme d'une interphase ;
- la consolidation de l'âme de préforme (200) par densification partielle de ladite âme comprenant la formation d'une phase de matrice par infiltration chimique en phase gazeuse ou par voie liquide ;
- le dépôt d'une poudre de particules céramiques dans la porosité de l'âme de préforme ;
- le drapage d'une ou plusieurs strates de fibres non tissées pré-imprégnés (310, 320, 330, 340, 350, 360) sur tout ou partie de la surface externe de l'âme de préforme (200) ;
- le traitement thermique de l'âme de préforme et de la ou les strates pré-imprégnées de manière à former une préforme fibreuse hybride ;
- la poursuite de la densification par infiltration de la préforme fibreuse hybride avec une composition d'infiltration contenant au moins du silicium de manière à obtenir une pièce en matériau composite à matrice céramique.

2. Procédé selon la revendication 1, dans lequel la structure fibreuse (100) destinée à former l'âme de préforme est tissée avec des fils de fibres de carbure de silicium ou des fibres de carbone.

3. Procédé selon l'une quelconque des revendications 1 et 2, dans lequel l'interphase est constituée de carbone pyrolytique ou de nitrure de bore.

4. Procédé selon l'une quelconque des revendications 1 et 2, dans lequel, lors de la consolidation, la phase de matrice est formée dans l'âme de préforme par infiltration chimique en phase gazeuse, la phase de matrice correspondant à une matrice de carbure de silicium ou une matrice auto-cicatrisante.

5. Procédé selon l'une quelconque des revendications 1 à 4, comprenant, après la consolidation de l'âme de préforme (200), l'usinage de l'âme de préforme.

6. Procédé selon l'une quelconque des revendications 1 à 5, dans lequel le matériau céramique des particules déposées dans la porosité de l'âme de préforme (200) est choisi parmi un des matériaux suivants ou un mélange des matériaux suivants: carbure de silicium, nitrure de silicium, siliciure de titane, carbure de bore et carbone.

7. Procédé selon l'une quelconque des revendications 1 à 6, dans lequel la ou les strates non tissées pré-imprégnées (310, 320, 330, 340, 350, 360) sont formées à partir de fils de fibres de carbure de silicium ou de carbone.

8. Procédé selon l'une quelconque des revendications 1 à 7, dans lequel les strates non tissées pré-imprégnées (310, 320, 330, 340, 350, 360) sont des strates unidirectionnelles de fibres continues ou des strates de fibres discontinues.

9. Procédé selon l'une quelconque des revendications 1 à 8, dans lequel les strates non tissées (310, 320, 330, 340, 350, 360) sont pré-imprégnées avec une résine précurseur de carbone ou de carbure de silicium, le traitement thermique comprenant un traitement de polymérisation de la résine et un traitement de pyrolyse pour transformer le précurseur en carbone ou en carbure de silicium.

10. Application du procédé selon l'une quelconque des revendications 1 à 9 à la fabrication d'une aube, d'un distributeur ou d'une chambre de combustion de turbine à gaz.

## Patentansprüche

1. Verfahren zur Herstellung eines Teils aus Verbundmaterial mit einer Matrix zumindest größtenteils aus Keramik, wobei das Verfahren umfasst:
- die Verwirklichung eines Fasergebildes (100) durch dreidimensionale oder mehrlagige Verwebung,
- die Formung des Fasergebildes, um einen Faservorform-Kern (200) zu bilden,
- die Ablagerung einer Zwischenphase auf den Fasern des Vorform-Kerns,
- die Verfestigung des Vorform-Kerns (200) durch teilweise Verdichtung des Kerns, umfassend die Bildung einer Matrixphase durch chemische Infiltration in der Gasphase oder auf flüssigem Weg,
- die Ablagerung eines Pulvers aus Keramikpartikeln in der Porosität des Vorform-Kerns,
- die Drapierung einer oder mehrerer vorimprägnierter Faservliesschichten (310, 320, 330, 340, 350, 360) auf die gesamte oder einen Teil der äußeren Oberfläche des Vorform-Kerns (200),
- die Wärmebehandlung des Vorform-Kerns und der vorimprägnierten Schicht(en) auf solche Weise, um eine hybride Faservorform zu bilden,
- die Fortsetzung der Verdichtung durch Infiltration der hybriden Faservorform mit einer Infiltrations-Zusammensetzung, die zumindest Silizium enthält, auf solche Weise, um einen Teil aus Verbundmaterial mit keramischer Matrix zu erhalten.

2. Verfahren nach Anspruch 1, wobei das Fasergebilde (100), das dazu bestimmt ist, den Vorform-Kern zu bilden, mit Fäden aus Siliziumkarbidfasern oder Kohlenstofffasern gewebt wird.

3. Verfahren nach einem der Ansprüche 1 und 2, wobei die Zwischenphase aus pyrolytischem Kohlenstoff oder Bornitrid besteht.

4. Verfahren nach einem der Ansprüche 1 und 2, wobei während der Verfestigung die Matrixphase in dem Vorform-Kern durch chemische Infiltration in der Gasphase gebildet wird, wobei die Matrixphase einer Matrix aus Siliziumkarbid oder einer selbstheilenden Matrix entspricht.

5. Verfahren nach einem der Ansprüche 1 bis 4, umfassend die maschinelle Bearbeitung des Vorform-Kerns (200) nach der Verfestigung des Vorform-Kerns.

6. Verfahren nach einem der Ansprüche 1 bis 5, wobei das Keramikmaterial der Partikel, die in der Porosität des Vorform-Kerns (200) abgelagert werden, aus einem der folgenden Materialien oder einer Mischung der folgenden Materialien ausgewählt wird: Siliziumkarbid, Siliziumnitrid, Titansilizid, Borkarbid und Kohlenstoff.

7. Verfahren nach einem der Ansprüche 1 bis 6, wobei die vorimprägnierte(n) Vliesschicht(en) (310, 320, 330, 340, 350, 360) ausgehend von Fäden aus Siliziumkarbid- oder Kohlenstofffasern gewebt wird/werden.

8. Verfahren nach einem der Ansprüche 1 bis 7, wobei die vorimprägnierten Vliesschichten (310, 320, 330, 340, 350, 360) Schichten aus durchgehenden Fasern in einer Richtung oder Schichten aus nicht durchgehenden Fasern sind.

9. Verfahren nach einem der Ansprüche 1 bis 8, wobei die Vliesschichten (310, 320, 330, 340, 350, 360) mit einem Harzvorläufer von Kohlenstoff oder Siliziumkarbid vorimprägniert werden, wobei die Wärmebehandlung eine Behandlung zur Polymerisation des Harzes und eine Pyrolysebehandlung umfasst, um den Vorläufer in Kohlenstoff oder Siliziumkarbid umzuwandeln.

10. Anwendung des Verfahrens nach einem der Ansprüche 1 bis 9 auf die Fertigung einer Schaufel, eines Verteilers oder einer Verbrennungskammer einer Gasturbine.

## Claims

1. A process for manufacturing a part made of a composite material with a matrix at least predominantly made of ceramic, the process comprising:
- the production of a fibrous structure (100) by three-dimensional or multilayer weaving;
- the shaping of the fibrous structure to form a fibrous preform core (200);
- the deposition of an interphase on the fibers of the preform core;
- the consolidation of the preform core (200) by partial densification of said core comprising the formation of a matrix phase by chemical vapor infiltration or by a liquid process;
- the deposition of a powder of ceramic particles in the porosity of the preform core;
- the draping of one or more layers of pre-impregnated non-woven fibers (310, 320, 330, 340, 350, 360) over all or part of the outer surface of the preform core (200);
- the heat treatment of the preform core and of the pre-impregnated layer(s) to form a hybrid fibrous preform;
- the further densification by infiltration of the hybrid fibrous preform with an infiltration composition containing at least silicon in order to obtain a ceramic matrix composite part.

2. The process as claimed in claim 1, wherein the fibrous structure (100) intended to form the preform core is woven with silicon carbide fiber threads or carbon fibers.

3. The process as claimed in any one of claims 1 and 2, wherein the interphase consists of pyrolytic carbon or of boron nitride.

4. The process as claimed in any one of claims 1 and 2, wherein, during consolidation, the matrix phase is formed in the preform core by chemical vapor infiltration, the matrix phase corresponding to a silicon carbide matrix or a self-healing matrix.

5. The process as claimed in any one of claims 1 to 4, comprising, after the consolidation of the preform core (200), the machining of the preform core.

6. The process as claimed in any one of claims 1 to 5, wherein the ceramic material of the particles deposited in the porosity of the preform core (200) is selected from one of the following materials or a mixture of the following materials: silicon carbide, silicon nitride, titanium silicide, boron carbide and carbon.

7. The process as claimed in any one of claims 1 to 6, wherein the pre-impregnated non-woven layer(s) (310, 320, 330, 340, 350, 360) are formed from silicon carbide or carbon carbide fiber threads.

8. The process as claimed in any one of claims 1 to 7 wherein the pre-impregnated non-woven layers (310, 320, 330, 340, 350, 360) are unidirectional layers of continuous fibers or layers of discontinuous fibers.

9. The process as claimed in any one of claims 1 to 8, wherein the non-woven layers (310, 320, 330, 340, 350, 360) are pre-impregnated with a carbon or silicon carbide precursor resin, the heat treatment comprising a polymerization treatment of the resin and a pyrolysis treatment to convert the precursor to carbon or to silicon carbide.

10. Application of the process as claimed in any one of claims 1 to 9 to the manufacture of a gas turbine blade, nozzle or combustor.
